# EUROPEAN PATENT APPLICATION

(11) **EP 4 336 928 A1**
(43) Date of publication of application: **13.03.2024**
(21) Application number: 21939861.7
(22) Date of filing: 07.05.2021
(51) Int. Cl.: H04W 72/04, H04W 4/06

(54) **TERMINAL AND RADIO COMMUNICATION METHOD**

(71) Applicant: NTT DOCOMO, INC., Tokyo 100-6150 (JP)
(72) Inventor: MATSUMURA Yuki, Tokyo 100-6150 (JP); YOSHIOKA Shohei, Tokyo 100-6150 (JP); NAGATA Satoshi, Tokyo 100-6150 (JP)
(74) Representative: Hoffmann Eitle
(86) International application number: PCT/JP2021/017564
(87) International publication number: WO 2022/234670

(57) **Abstract**

A terminal receives first downlink control information for individual terminals and second downlink control information for data distribution to a plurality of terminals. The terminal assumes that the size of the first downlink control information is adjusted to the size of the second downlink control information and performs scheduling of the downlink data channel.

## Description

### [Technical Field]

The present disclosure relates to a terminal and a radio communication method corresponding to a multicast/broadcast service.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Release 17 of the 3GPP covers simultaneous data transmission (also called broadcasting) services (tentatively called Multicast and Broadcast Services (MBS)) to specified or unspecified multiple terminals (User Equipment, UE) in NR (Non-Patent Literature 1).

Among the existing Downlink Control Information (DCI) formats, MBS is expected to support scheduling using DCI format 1_0 (DCI 1_0 shall be omitted as appropriate, and other DCI formats shall be described as appropriate.) for at least the Physical Downlink Shared Channel (PDSCH).

MBS is also considering support for DCI 1_1 and DCI 1_2, which are also DCIs for PDSCH and have different sizes (number of bits).

### [Citation List]

### [Non-Patent Literature]

### [Non-Patent Literature 1]

"New Work Item on NR support of Multicast and Broadcast Services," RP-193248, 3GPP TSG RAN Meeting #86, 3GPP, December 2019

### [Summary of Invention]

However, as the number of candidate DCIs increases in the MBS, the number of blind detections at the time of receiving the DCIs also increases, which may lead to performance degradation.

On the other hand, in the case of individual DCIs for UEs that are not MBS, it is desirable to ensure the flexibility to freely set the size.

Accordingly, the following disclosure has been made in view of this situation, and is intended to provide a terminal and a radio communication method that can avoid performance degradation associated with an increase in the number of blind detections in a simultaneous data transmission service to a plurality of specified or unspecified terminals while ensuring the flexibility of the DCI size setting.

An aspect of the present disclosure is a terminal (UE200) including a reception unit (control signal and reference signal processing unit 240) that receives first downlink control information for individual terminals and second downlink control information for data distribution to a plurality of terminals, and a control unit (control unit 270) that performs downlink data channel scheduling assuming that a size of the first downlink control information is adjusted to a size of the second downlink control information.

An aspect of the present disclosure is a terminal (UE200) including a reception unit (control signal and reference signal processing unit 240) that receives first downlink control information for individual terminals and second downlink control information for data distribution to a plurality of terminals, and a control unit (control unit 270) that performs downlink data channel scheduling assuming that a size of the second downlink control information is adjusted to a size of the first downlink control information.

An aspect of the present disclosure is a terminal (UE200) a reception unit (control signal and reference signal processing unit 240) that receives first downlink control information for individual terminals and second downlink control information for data distribution to a plurality of terminals, and a control unit (control unit 270) that performs downlink data channel scheduling, assuming that a size of the first downlink control information and a size of the second downlink control information are common.

An aspect of the present disclosure is a radio communication method including the steps of receiving first downlink control information for individual terminals and second downlink control information for data distribution to a plurality of terminals, and assuming that a size of the second downlink control information is adjusted to a size of the first downlink control information and performing scheduling of a downlink data channel.

An aspect of the present disclosure is a radio communication method including the steps of receiving first downlink control information for individual terminals and second downlink control information for data distribution to a plurality of terminals, and assuming that a size of the second downlink control information is adjusted to a size of the first downlink control information and performing scheduling of the downlink data channel.

An aspect of the present disclosure is a radio communication method including the steps of receiving first downlink control information for individual terminals and second downlink control information for data distribution to a plurality of terminals, and assuming that a size of the first downlink control information and a size of the second downlink control information are common and performing scheduling of a downlink data channel.

### [Brief Description of Drawings]

[Fig. 1]

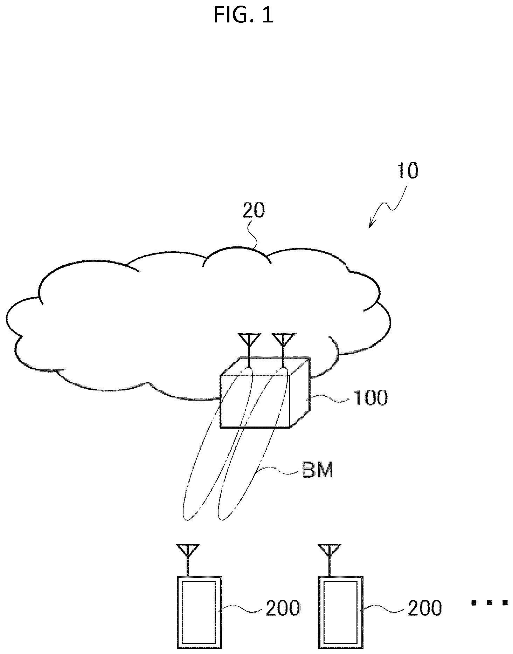

   Fig. 1 is a general schematic diagram of a radio communication system 10.
[Fig. 2]

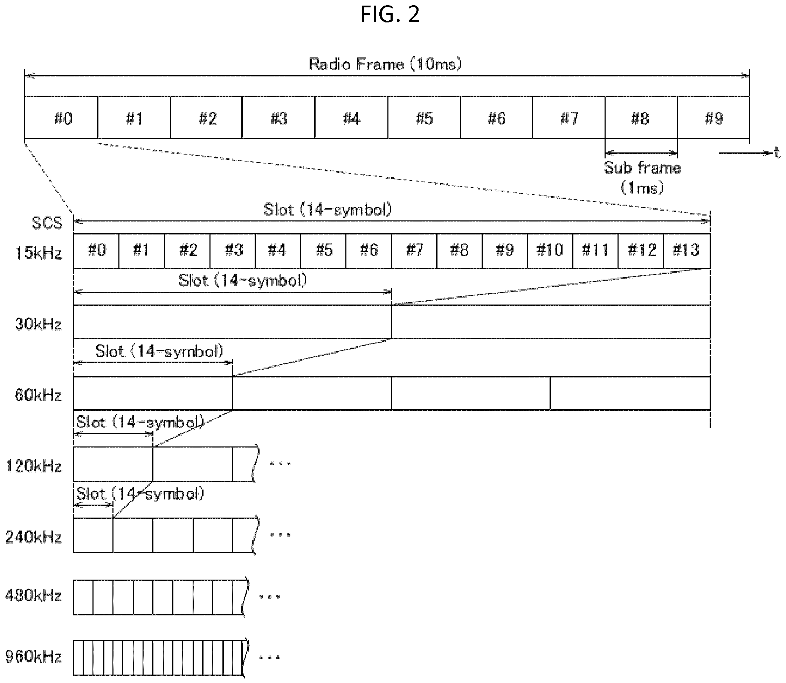

   Fig. 2 is a diagram showing a configuration example of a radio frame, a sub-frame and a slot used in the radio communication system 10.
[Fig. 3]

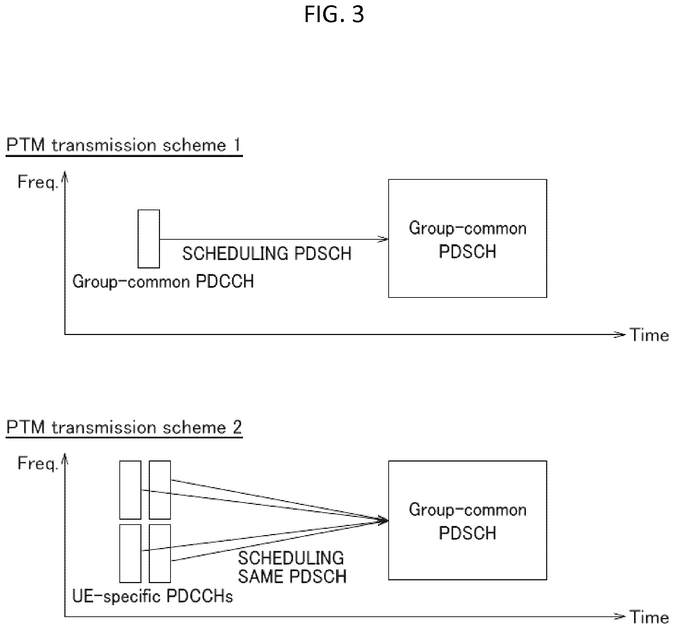

   Fig. 3 is a diagram showing a configuration example of the PTM transmission system 1 and the PTM transmission system 2.
[Fig. 4]

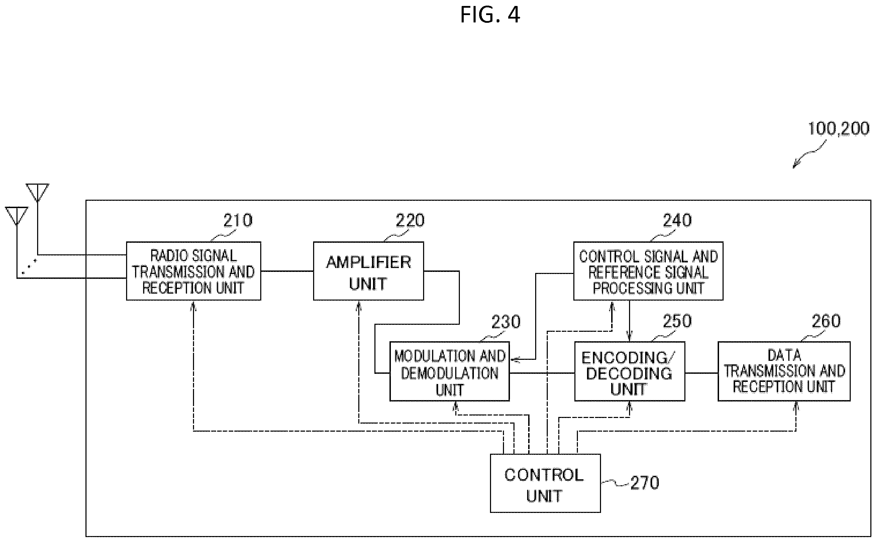

   Fig. 4 is a functional block diagram of a gNB100 and a UE200.
[Fig. 5]

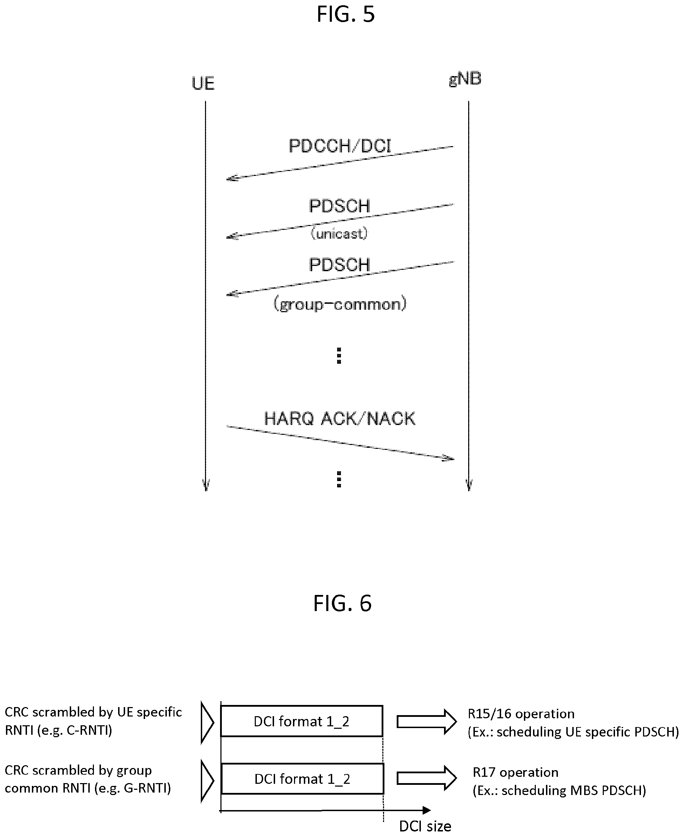

   Fig. 5 is a diagram showing an example sequence of PDCCH, PDSCH and HARQ feedback in MBS.
[Fig. 6]
   Fig. 6 is a diagram showing an example of a correspondence relationship between RNTI and DCI format in the case of supporting MBS.
[Fig. 7]

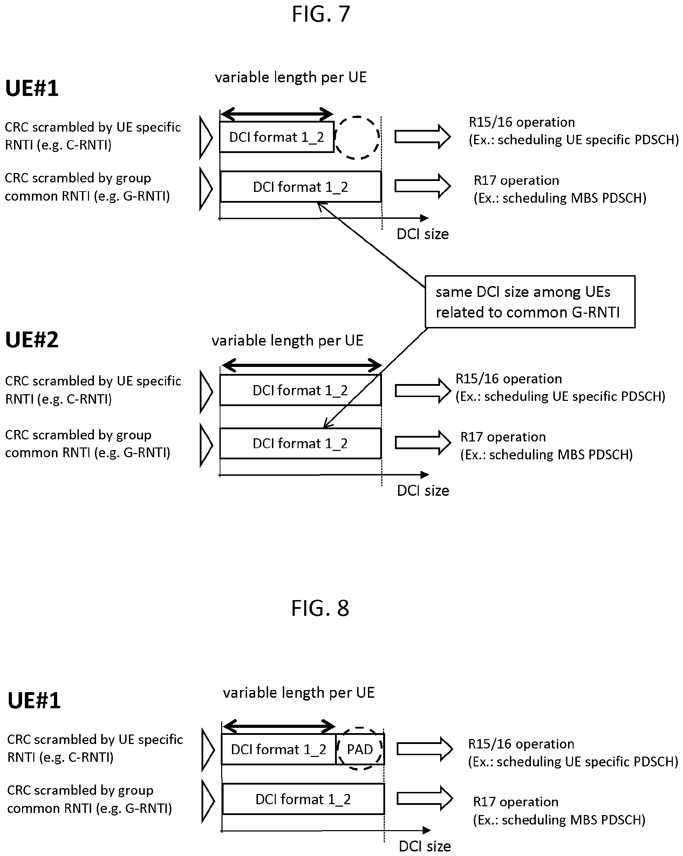

   Fig. 7 is a diagram showing an example in which a common DCI size is applied among UEs related to G-RNTI when MBS is supported.
[Fig. 8]
   Fig. 8 is a diagram showing an example of a correspondence relationship between RNTI and DCI format according to operation example 1-1.
[Fig. 9]

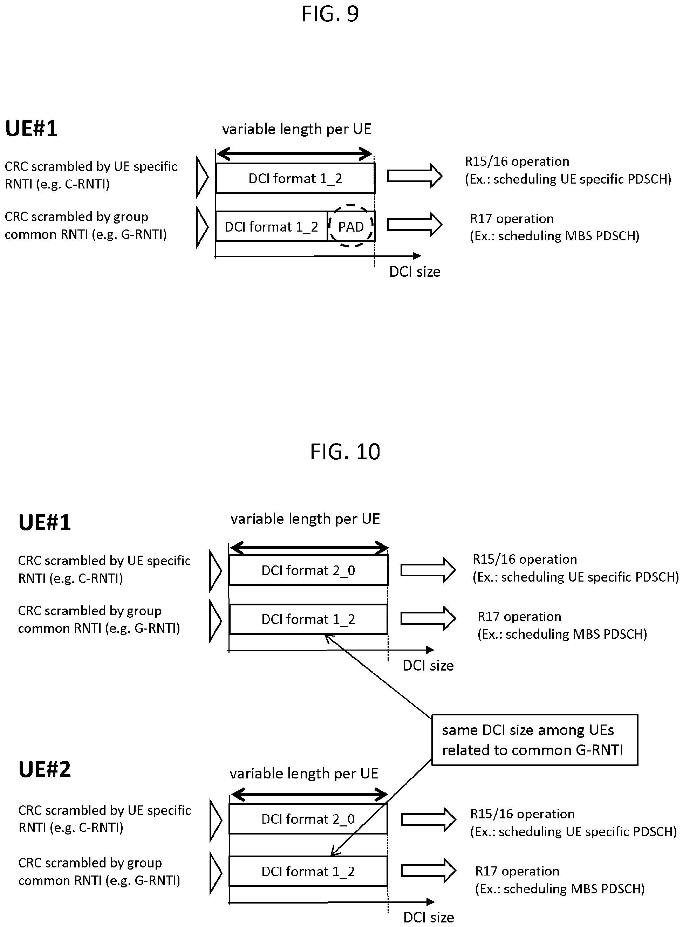

   Fig. 9 is a diagram showing an example of a correspondence relationship between RNTI and DCI format according to operation example 1-2.
[Fig. 10]
   Fig. 10 is a diagram showing an example of a correspondence relationship between RNTI and DCI format according to operation example 2.
[Fig. 11]

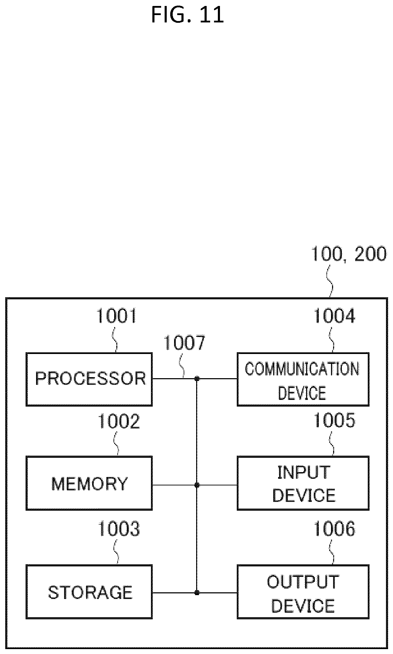

   Fig. 11 is a diagram showing an example of a hardware configuration of the gNB100 and the UE200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

### (1.1) Example of a system configuration

Fig. 1 is an overall schematic configuration diagram of a radio communication system 10 according to the present embodiment. The radio communication system 10 is a radio communication system according to 5G New Radio(NR) and includes the Next Generation-Radio Access Network 20 (hereinafter referred to as the NG-RAN20 and a plurality of terminals 200 (User Equipment 200, UE200).

The radio communication system 10 may be a radio communication system according to a system called Beyond 5G, 5G Evolution or 6G.

The NG-RAN20 includes a radio base station 100 (gNB100). The specific configuration of radio communication system 10 including the number of gNBs and UEs is not limited to the example shown in Fig. 1.

The NG-RAN20 actually includes a plurality of NG-RAN Nodes, specifically gNBs (or ng-eNBs), connected to a core network (5GC, not shown) according to 5G. Note that the NG-RAN20 and 5 GCs may be simply described as "networks ".

The gNB100 is a radio base station according to the NR, and performs radio communication according to the UE200 and the NR. The gNB100 and the UE200 can support Massive MIMO, which generates a more directional beam BM by controlling radio signals transmitted from a plurality of antenna elements, carrier aggregation (CA), which uses a plurality of component carriers (CCs) bundled together, and dual connectivity (DC), which simultaneously communicates between the UE and each of a plurality of NG-RAN nodes.
radio communication system 10 supports FR1 and FR2. The frequency band of each FR(Frequency Range) is as follows.

▪ FR1:410 MHz~7.125 GHz
▪ FR2:24.25 GHz~52.6 GHz

FR1 uses sub-carrier spacing (SCS) of 15, 30 or 60 kHz and may use a bandwidth (BW) of 5~100 MHz. FR2 is higher frequency than FR1 and may use SCS of 60 or 120 kHz (may include 240 kHz) and may use a bandwidth (BW) of 50~400 MHz.

In addition, radio communication system 10 may support higher frequency bands than those of FR2. Specifically, radio communication system 10 may support frequency bands greater than 52.6 GHz and up to 114.25 GHz. radio communication system 10 may also support frequency bands between FR1 and FR2.

Cyclic Prefix-Orthogonal Frequency Division Multiplexing(CP-OFDM)/Discrete Fourier Transform-Spread (DFT-S-OFDM) with greater Sub-Carrier Spacing (SCS) may also be applied. Furthermore, DFT-S-OFDM may be applied not only to the uplink (UL) but also to the downlink (DL).

Fig. 2 shows a configuration example of a radio frame, subframe and slot used in radio communication system 10.

As shown in Fig. 2, one slot is composed of 14 symbols, and the larger (wider) the SCS, the shorter the symbol period (and slot period). Note that the number of symbols constituting one slot may not necessarily be 14 symbols (For example, 28, 56 symbols). The number of slots per subframe may vary depending on the SCS. In addition, the SCS may be wider than 240 kHz (For example, as shown in Fig. 2, 480 kHz, 960 kHz).

Note that the time direction (t) shown in Fig. 2 may be referred to as a time domain, symbol period, symbol time, etc. The frequency direction may be referred to as a frequency domain, resource block, resource block group, subcarrier, BWP (Bandwidth part), subchannel, common frequency resource, etc.

### (1.2) Provision of MBS

The radio communication system 10 may provide Multicast and Broadcast Services (MBS).

For example, in a stadium or hall, a large number of UE200s may be located in a certain geographic area and a large number of UE200 s may simultaneously receive the same data. In such a case, the use of MBS rather than unicast is effective.

Unicast may be interpreted as communication performed 1:1 with the network by specifying a specific UE200 (UE200 specific identification information may be specified).

Multicast may be interpreted as communication performed 1: 1 with the network by specifying a specific plurality of UE200 (multicast identification information may be specified). As a result, the number of UE200 that receive the received multicast data may be 1.

The broadcast may be interpreted as a communication between all UE200 and the network in an unspecified number. The multicast/broadcast data may have the same copied content, but some content, such as headers, may be different. The multicast/broadcast data may also be transmitted (distributed) simultaneously, but does not necessarily require strict concurrency and may include propagation delays and/or processing delays within the RAN node.

The target UE200 may be in an idle state (RRC idle), a connected state (RRC connected), or any other state (For example, the inactive state) in the wireless resource control layer (RRC). The inactive state may be interpreted as a state in which some settings of the RRC are maintained.

MBS assumes the following three methods for scheduling multicast/broadcast PDSCH(Physical Downlink Shared Channel), specifically scheduling MBS packets (which may be read as data). RRC connected UE may be read as RRC idle UE or RRC inactive UE.

PTM transmission method 1(PTM-1): Schedule group-common PDSCH using group-common PDCCH(Physical Downlink Control Channel) for the MBS group of the RRC connected UE.

The CRC(Cyclic Redundancy Checksum) and PDSCH of the PDCCH are scrambled by group-common RNTI(Radio Network Temporary Identifier).

PTM Transmission Method 2(PTM-2): Schedule a group-common PDSCH using a terminal-specific PDCCH for the MBS group of the RRC connected UE.

The CRC of the PDCCH is scrambled by the UE-specific RNTI.

The PDSCH is scrambled by the group-common RNTI.

PTP transmission method: Schedule UE-specific PDSCH using UE-specific PDCCH for RRC connected UE.

Scramble CRC and PDSCH of PDCCH by UE-specific RNTI. In other words, it may mean that MBS packets are transmitted by unicast.

Fig. 3 shows a configuration example of PTM transmission method 1 and PTM transmission method 2. The UE-specific PDCCH/PDSCH may be identified by the target UE, but may not be identified by other UEs in the same MBS group. The group-common PDCCH/PDSCH is transmitted at the same time/frequency resource and can be identified by all UEs in the same MBS group. The names of the PTM transmission methods 1 and 2 are tentative and may be called by different names as long as the operations described above are performed.

In point-to-point (PTP) distribution, the RAN node may wirelessly distribute individual copies of the MBS data packets to individual UEs. In point-to-multipoint (PTM) distribution, the RAN node may wirelessly distribute a single copy of the MBS data packets to a set of UEs.

In order to improve the reliability of MBS, the following two feedback methods are envisaged for HARQ(Hybrid Automatic repeat request) feedback, specifically HARQ feedback for multicast/broadcast PDSCH.

Option 1: Feedback of both ACK and NACK (ACK/NACK feedback) A UE that has successfully received or decrypted a PDSCH transmits an ACK A UE that has failed to receive or decrypt a PDSCH transmits a NACK PUCCH(Physical Uplink Control Channel) resource settings: PUCCH-Config can be configured for multicast
   ▪PUCCH resources: Shared/orthogonal between UEs depends on the network configuration
   ▪HARQ-ACK CB (codebook): Supports type-1 and type-2(CB decision algorithm specified in 3GPP TS 38.213)
   ▪Multiplexing: enable unicast or multicast
Option 2: NACK-only feedback
   ▪A UE that successfully receives or decrypts PDSCH does not transmit an ACK (does not transmit a response)
   ▪A UE that fails to receive or decrypt PDSCH transmits a NACK
   ▪For a given UE, PUCCH resource settings can be configured separately by unicast or group cast (multicast)
Note that ACK may be called positive acknowledgement and NACK may be called negative acknowledgement. HARQ may be called automatic retransmit request.

Enabling/Disabling Option 1 or Option 2 may be either:
▪RRC and Downlink Control Information (DCI)
▪RRC only

In addition, the following is expected for semi-persistent scheduling (SPS) for multicast/broadcast PDSCH:
▪Adopts SPS group-common PDSCH
▪Multiple SPS group-common PDSCH can be configured for UE capability
▪HARQ feedback for SPS group-common PDSCH is possible
▪Activation/deactivation with at least group-common PDCCH is possible

Note that deactivation may be replaced with other synonymous terms such as release. For example, activation may be replaced with start, start, trigger, etc., and deactivation may be replaced with end, stop, etc.

SPS is scheduling used as a contrast to dynamic scheduling and may be referred to as semi-fixed, semi-persistent, semi-persistent, etc., and may be interpreted as Configured Scheduling(CS).

Scheduling may be interpreted as the process of allocating resources to transmit data. Dynamic scheduling may be interpreted as the mechanism by which all PDSCH are scheduled by DCI (For example, DCI 1_0, DCI 1_1, or DCI 1_2). SPS may be interpreted as the mechanism by which PDSCH transmissions are scheduled by higher layer signaling, such as RRC messages.

Also, for the physical layer, there may be a scheduling category of time domain scheduling and frequency domain scheduling.

Furthermore, multicast, group cast, broadcast, and MBS may be interchanged. Multicast PDSCH (May include group-common PDSCH and SPS group-common PDSCH), MBS PDSCH, and PDSCH scrambled by group common RNTI (which may be called G-RNTI) may be interchanged.

In addition, data and packet terms may be interchanged and may be interpreted as synonymous with terms such as signal, data unit, etc. and transmission, reception, transmission and delivery may be interchanged.

### (2)Function block configuration of radio communication system

Next, a functional block configuration of radio communication system 10 will be described. Specifically, a functional block configuration of the gNB100 and the UE200 will be described.

Fig. 4 is a functional block diagram of the gNB100 and the UE200. The UE200 will be described below. As shown in Fig. 4, the UE200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

Note that in Fig. 4, only the main functional blocks related to the description of the embodiment are shown, and the UE200 includes other functional blocks (For example, the power supply unit). Fig. 4 also shows the functional block configuration of the UE200(gNB100), and refer to Fig. 17 for the hardware configuration.

The radio signal transmission and reception unit 210 transmits and receives radio signals in accordance with the NR. The radio signal transmission and reception unit 210 corresponds to a Massive MIMO, a CA using a plurality of CCs bundled together, and a DC that simultaneously communicates between a UE and each of two NG-RAN Nodes.

The radio signal transmission and reception unit 210 also supports MBS and can receive a downlink channel common to a group of terminals in data distribution for a plurality of UE200 s. In this embodiment, radio signal transmission and reception unit 210 may constitute a reception unit.

The radio signal transmission and reception unit 210 may receive a downstream data channel (PDSCH) common to the terminal group, specifically, a group-common PDSCH (which may include an SPS group-common PDSCH). The radio signal transmission and reception unit 210 may also receive a downstream control channel common to the terminal group, specifically, a group-common PDCCH.

The amplifier unit 220 is configured by a PA (Power Amplifier)/LNA (Low Noise Amplifier) or the like. The amplifier unit 220 amplifies the signal output from the modulation and demodulation unit 230 to a predetermined power level. The amplifier unit 220 amplifies the RF signal output from the radio signal transmission and reception unit 210.

The modulation and demodulation unit 230 performs data modulation/demodulation, transmission power setting, resource block allocation, etc., for each predetermined communication destination (gNB100, etc.). In the modulation and demodulation unit 230, Cyclic Prefix-Orthogonal Frequency Division Multiplexing(CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing related to various control signals transmitted and received by the UE200 and various reference signals transmitted and received by the UE200.

Specifically, the control signal and reference signal processing unit 240 receives various control signals transmitted from the gNB100 via a predetermined control channel, for example, a radio resource control layer (RRC) control signal. The control signal and reference signal processing unit 240 also transmits various control signals to the gNB100 via a predetermined control channel.

The control signal and reference signal processing unit 240 performs processing using a reference signal (RS) such as a demodulation reference signal (DMRS) and a phase tracking reference signal (PTRS).

The DMRS is a known reference signal (pilot signal) between a base station and a terminal of each terminal for estimating a fading channel used for data demodulation. The PTRS is a reference signal of each terminal for estimating phase noise, which is a problem in a high frequency band.

In addition to the DMRS and the PTRS, the reference signal may include a Channel State Information-Reference Signal(CSI-RS), a Sounding Reference Signal (SRS), and a Positioning Reference Signal (PRS) for position information.

The channel may include a control channel and a data channel. The control channel may include PDCCH, PUCCH(Physical Uplink Control Channel), RACH (Random Access Channel, Downlink Control Information (DCI) with Random Access Radio Network Temporary Identifier(RA-RNTI)), and Physical Broadcast Channel (PBCH).

The data channels include PDSCH and PUSCH(Physical Uplink Shared Channel). Data may mean data transmitted over a data channel.

In this embodiment, the control signal and reference signal processing unit 240 may comprise a reception unit that receives downlink control information (DCI). Specifically, the control signal and reference signal processing unit 240 can receive DCI for the downlink data channel. Downlink data channel may mean PDSCH, and (scheduling) DCI for PDSCH may include, for example, DCI format 1_0 (DCI 1_0). DCI for PDSCH may include DCI 1_1 and DCI 1_2. DCI may also include DCI format 2_x (For convenience, DCI 2_x), which notifies multiple UEs of DCI, such as slot formats.

DCI 1_0, 1_1, 1_2 may all be DCI for scheduling PDSCH in one cell, but DCI 1_0 may be defined as the smallest DCI in this. That is, DCI 1_0 may be specified as the minimum size DCI (downlink control information) for the PDSCH (downlink data channel). In addition, DCI 1_0 may be a DCI format that schedules the PDSCH when system information or random access is performed. DCI 1_0 may be a DCI format in which multiple UEs in a BWP/cell assume the same DCI size.

The control signal and reference signal processing unit 240 may also receive a DCI (which may be referred to as the first downlink control information) for the individual UEs 200 and a DCI (which may be referred to as the second downlink control information) for data delivery to the multiple UEs 200, that is, for the MBS.

The DCI for the individual UEs 200 may mean a DCI that is CRC scrambled by a UE-specific RNTI (For example, C (Cell)-RNTI), and the aforementioned DCI 1_0, DCI 1_1, or DCI 1_2 may apply. Alternatively, the DCIs may include DCI 2_0, DCI 2_1, and the like.

The DCI for MBS may mean a DCI that is CRC scrambled by a group common RNTI(G-RNTI), and the DCI 1_0, DCI 1_1, or DCI 1_2 described above may be applicable. Other DCIs such as DCI 2_0 may be included as DCIs for MBS.

DCIs for individual UEs 200 may be resized for each UE. That is, the DCIs may be of variable length. On the other hand, the DCIs for the MBS may have a common size for a plurality of UEs (which may be interpreted as UEs in a group).

The sizing of the DCIs may be performed, for example, as follows: If the sizes of DCI 0_0, DCI 1_0(USS: UE specific search space) and DCI 0_0, 1_0 (CSS: Common search space) are different, DCI 0_0/1_0 (USS) may be adjusted to the size of DCI 0_0/1_0 (CSS). Since CSS determines the bit size of Frequency Domain Resource Allocation (FDRA) based on the initial BWP frequency width/Physical RB (PRB) size, and USS determines the bit size of FDRA based on the configured BWP frequency width/PRB size, CSS and USS may have different sizes of DCIs.

The size of the DCI monitored by using the C-RNTI includes, for example, the following types.

▪0_0/1_0 (CSS/USS)
▪0_1/1_1
▪0_2/1_2

Note that the DCI 0_0 and DCI 0_1 may be unique to a cell rather than individual UEs. In addition, DCIs that are not related to G-RNTI may be determined unique to a cell.

The encoding/decoding unit 250 performs data partitioning/concatenation and channel coding/decoding for each predetermined communication destination (gNB100 or other gNB).

Specifically, the encoding/decoding unit 250 divides the data output from data transmission and reception unit 260 into predetermined sizes and performs channel coding on the divided data. encoding/decoding unit 250 decodes the data output from modulation and demodulation unit 230 and concatenates the decoded data.

The data transmission and reception unit 260 transmits and receives the protocol data unit (PDU) and the service data unit (SDU). Specifically, the data transmission and reception unit 260 performs assembly/disassembly of the PDU/SDU in a plurality of layers (Media access control layer (MAC), radio link control layer (RLC), packet data convergence protocol layer (PDCP), etc.). The data transmission and reception unit 260 also performs data error correction and retransmission control based on the hybrid automatic repeat request (ARQ).

The control unit 270 controls each function block constituting the UE200. In particular, in the present embodiment, the control unit 270 performs control on the scheduling of the downlink channel with respect to the MBS and the HARQ feedback of the channel.

The control unit 270 performs control corresponding to scheduling of a downlink data channel common to a terminal group in data distribution to the MBS, that is, a plurality of UEs 200. Specifically, the control unit 270 can perform control corresponding to scheduling of the group-common PDCCH and the group-common PDSCH.

Further, the control unit 270 can perform scheduling of the downlink channel, specifically, the downlink data channel such as the PDSCH (May include group-common PDSCH and SPS group-common PDSCH, hereinafter the same), based on the DCI received by the control signal and reference signal processing unit 240.

The DCI may be scrambled (DCI format with CRC scrambled by G-RNTI) with the CRC. The G-RNTI is the RNTI associated with the terminal group and may be called by another name.

The control unit 270 may assume that the DCI associated with the G-RNTI (which may be in DCI format) is a common size among UEs associated with the same G-RNTI. On the other hand, control unit 270 may assume that the size of the DCI not associated with the G-RNTI (For example, CRC scrambled DCI with C-RNTI) is set for each UE.

Specifically, the control unit 270 may assume that the size of the individual UE200 DCI (first downlink control information) is adjusted to the size of the MBS DCI (second downlink control information), and execute scheduling of the downlink data channel (PDSCH).

More specifically, the individual UE200 DCI(CRC scrambled by UE specific RNTI) may be assumed to have additional padding bits for size adjustment. The individual UE200 DCI may be interpreted as a DCI format not associated with G-RNTI (For example, CRC scrambled DCI format x with C-RNTI). Here, DCI format x may mean one or more specific DCI formats (s) (For example, DCI format 1_0).

The padding bits may be added to match the size of the DCI common to the CRC scrambled by group common RNTI for MBS. The DCI for MBS may be interpreted as the DCI format associated with G-RNTI (For example, CRC scrambled DCI format x with G-RNTI).

The padding bit may be fixed to a predetermined bit (0, 1) or may be a bit sequence (For example, a pseudorandom (PN) code) generated by using a conversion formula or the like.

Alternatively, the control unit 270 may assume that the size of the DCI (second downlink control information) for the MBS is adjusted to the size of the individual DCI (first downlink control information) for the UE200, and execute scheduling of the downlink data channel (PDSCH).

In this case, it may be assumed that the size adjustment padding bit is added to the DCII(CRC scrambled by group common RNTI) for the MBS.

Further, the control unit 270 may assume that the size of the individual DCI (first downlink control information) for the UE200 and the size of the DCI (second downlink control information) for the MBS are common, and execute scheduling of the downlink data channel (PDSCH). The common size of both DCIs may be interpreted as the size of the DCI (DCI format x related to G-RNTI) for the MBS and the size of the individual DCI (For example, DCI format 2_x not related to G-RNTI) for the UE200. In other words, the padding bit may not be used in this case.

In this case, the DCI for the MBS may be limited to DCI 1_1 or DCI 1_2. In this case, DCI 1_0 for the MBS may be assumed as a C-RNTI, and DCI 1_1 or DCI 1_2 for the MBS may be assumed as another RNTI.

The control unit 270 may execute scheduling of the PDSCH based on the antenna port information included in the DCI. The information of the antenna port information may be indicated by 1 bit or 2 bits. The antenna port (number) may be read as the DMRS port (number).

The control unit 270 may determine whether the DCI contains antenna port information based on at least one of the upper layer (For example, RRC) control information or identification information used to scramble the DCI, specifically RNTI. That is, whether the DCI contains the field of the antenna port may be determined based on the control information or RNTI.

In this case, the DCI (For example, DCI 1_0) may be limited for MBS, that is, for scheduling multicast PDSCH. In this case, the PDSCH may be interpreted as a multicast PDSCH (PDSCH) for MBS and may be a scrambled PDSCH associated with an RNTI assigned to multiple UEs, such as a G-RNTI.

The gNB100 may also perform the downlink channel scheduling and HARQ control described above. For example, the gNB100 may include a transmission unit (control signal and reference signal processing unit 240) that transmits downlink control information (DCI) for the downlink data channel. As described above, a padding bit may be added to the DCI to adjust the size.

### (3)Operation of radio communication system

Next, the operation of radio communication system 10 will be described. Specifically, the downlink channel scheduling related to the MBS will be described, and specifically, the operation of scheduling the MBS PDSCH more flexibly than the DCI 1_0.

Fig. 5 shows an example sequence of PDCCH, PDSCH and HARQ feedback in MBS. As shown in Fig. 5, PDCCH (which may include DCI) and PDSCH may be transmitted by unicast or multicast (broadcast). The UE200 may also transmit HARQ feedback (ACK/NACK) for the channel (transport block (TB) received via).

In Fig. 5, it appears that after one PDCCH/DCI, both unicast PDSCH and multicast PDSCH are transmitted, but after one PDCCH/DCI, either unicast PDSCH or multicast PDSCH may be transmitted. That is, one PDCCH/DCI may schedule either unicast PDSCH or multicast PDSCH.

The PTM-1 described above may support DCI 1_0. Specifically, in the PTM-1, DCI 1_0 may be scrambled (DCI 1_0 with CRC scrambled by G-RNTI) with CRC.

G-RNTI may be used for group-common PDCCH CRC scrambling and/or PDSCH data scrambling of the MBS. G-RNTI may be set by the control information of the upper layer (For example, RRC). The G-RNTI may be an RNTI related to the group-common PDCCH and/or the group-common PDSCH (which may include the SPS group-common PDSCH) (hereinafter the same).

Fig. 6 is a diagram showing an example of the correspondence relationship between the RNTI and the DCI format when MBS is supported. As described above, at least DCI 1_0 may be used for the MBS PDSCH, and furthermore, DCI 1_1 and DCI 1_2 may also be used.

On the other hand, as the size of the candidate DCI increases, the number of blind detections (BD) increases, which is undesirable. Therefore, for a given UE, it is desirable that the DCI sizes of the DCI format x that schedules Unicast PDSCH and the DCI format x that schedules Multicast PDSCH are equal.

However, for DCI format x that schedules Unicast PDSCH, the DCI size may be different for each UE. For example, in DCI 1_0, the FDRA field is variable according to the size of the BWP (the total DCI size is also variable). In addition, in DCI 1_1 or DCI 1_2, various fields are variable according to the setting of the RRC (the total DCI size is also variable).

On the other hand, the DCI(DCI format) (with CRC scrambled by group common RNTI (e.g. G-RNTI)) for scheduling multicast PDSCH requires the same DCI size among UEs related to a common G-RNTI because multiple UEs receive (measure) a common DCI.

Fig. 7 shows an example in which a common DCI size is applied among UEs related to a G-RNTI when MBS is supported.

In 3GPP Releases 15 and 16, the size of a DCI (For example, CRC scrambled DCI with C-RNTI) not related to a G-RNTI can be set for each UE individually, but due to the constraints described above, a common (same) DCI size must be used among UEs related to a G-RNTI.

This means that supporting MBS creates constraints on the DCI format for scheduling unicast PDSCH, which is undesirable. In the example shown in Fig. 7, the number of BD times for UE#1 increases.

Therefore, in the following, an operation example in which the size of the DCI (For example, CRC scrambled DCI with C-RNTI) not related to the G-RNTI can be set individually for the UE, and the size of the DCI related to the G-RNTI is set to be common (same) among the UEs related to the same G-RNTI will be described.

### (3.1) Operation Example 1

In this operation example, the size of the DCI (For example, CRC scrambled DCI with C-RNTI) that is not related to the G-RNTI can be individually set by the UE (Same as Release 15, 16), and a padding bit that can be set by the upper layer (For example, RRC) is inserted after the DCI.

The target DCI format may include 1_0, 1_1, 1_2, 2_0, 2_1, etc. Note that the CSS of DCI 0_0/0_1 may be cell-specific rather than UE-specific. DCI not related to G-RNTI may also be determined cell specific.

### (3.1.1) Example 1-1

Fig. 8 is a diagram showing an example of a correspondence relationship between RNTI and DCI format according to Example 1-1. As shown in Fig. 8, a padding bit (PAD) may be added to DCI format x (For example, CRC scrambled DCI format x with C-RNTI) which is not related to G-RNTI. This makes the DCI size common to DCI format x (For example, CRC scrambled DCI format x with G-RNTI) which is related to G-RNTI.

A predetermined bit (0, 1) may be inserted into the field of the padding bit. Alternatively, a bit sequence (such as a PN code) generated by using a conversion formula or the like may be inserted into the field.

The number of bits in the padding bit may be set explicitly by the higher layer (RRC) or may be set implicitly without being set explicitly.

If not set explicitly, the UE200 may determine the size of the padding bit so that the total DCI size of each DCI field set to the DCI format x (For example, CRC scrambled DCI format x with G-RNTI) associated with the G-RNTI is equal to the total DCI size obtained by adding the padding bit to the DCI format x (For example, CRC scrambled DCI format x with C-RNTI) not associated with the G-RNTI.

Also, the insertion position of the padding bit is usually after the DCI (backward in time), but may be before the DCI or intermediate between the DCI. The padding bit may be called an additional bit, an extra bit, an additional bit, or the like. The padding bit may not be used for information transfer or may be used for some information transfer.

### (3.1.2) Example 1-2

Fig. 9 is a diagram showing an example of a correspondence relationship between RNTI and DCI format according to Example 1-2. Example 1-1 shows, but is not limited to, an example in which the size of DCI format x not associated with G-RNTI is smaller than the size of DCI format x associated with G-RNTI. As shown in Fig. 9, the UE200 may assume that a padding bit is similarly added even in the reverse case.

The size of the DCI (For example, CRC scrambled DCI with C-RNTI) not associated with the G-RNTI may be set separately for the UE (Same as Release 15, 16), and a padding bit that can be set by a higher layer (For example, RRC) may be inserted after the DCI format x associated with the G-RNTI.

Specifically, as shown in Fig. 9, the padding bit may be added to the DCI format x (For example, CRC scrambled DCI format x with G-RNTI) associated with the G-RNTI, and the DCI size may be common to the DCI format x (For example, CRC scrambled DCI format x with C-RNTI) not associated with the G-RNTI.

As in operation example 1-1, a predetermined bit (0, 1) may be inserted into the field of the padding bit. Alternatively, a bit sequence (such as a PN code) generated by using a conversion formula or the like may be inserted into the field.

The number of bits in the padding bit may be set explicitly by the higher layer (RRC) or may be set implicitly without being set explicitly.

If not set explicitly, the size of the padding bit may be determined so that the total DCI size of each DCI field set to DCI format x (For example, CRC scrambled DCI format x with C-RNTI), which is not related to G-RNTI, is equal to the total DCI size obtained by adding the padding bit to DCI format x (For example, CRC scrambled DCI format x with G-RNTI), which is related to G-RNTI.

If the format size of G-RNTI is larger than the format size of C-RNTI (or vice versa), it may be an error case (UE200 does not have to assume such a case). Thus, the existing format of C-RNTI can be prevented from being particularly affected.

In addition, as described above, the padding bit may not be particularly informative, and the UE200 may not perform measurement of the padding bit field or control using the DCI indicated by the padding bit field.

Although working examples 1-1 and 1-2 have shown that the padding bit field is provided only in either DCI format x not associated with G-RNTI or DCI format x associated with G-RNTI, the padding bit field may be provided after both DCIs. That is, the padding bit field may be inserted into both DCI format x not associated with G-RNTI and DCI format x associated with G-RNTI.

In this case, while the size of DCI format 1_2 not associated with G-RNTI may be varied for each UE, the size of DCI format 1_2 associated with G-RNTI may be aligned among UEs, and within a specific UE, the size of DCI format 1_2 associated with G-RNTI may be aligned with the size of DCI format 1_2 not associated with G-RNTI.

In this case, the upper layer (RRC) may notify the UE200 of the number of padding bits in DCI format x not associated with G-RNTI and DCI format x associated with G-RNTI. Alternatively, only the number of padding bits in one of the DCI formats may be notified, and the other may match the number of padding bits notified. In addition, not only the number of padding bits but also the size of the total DCI may be notified.

### (3.2) Operation Example 2

In this example, the UE200 may assume that the size of DCI format x related to G-RNTI is equal to the size of DCI format 2_x(group common PDCCH) not related to G-RNTI. That is, as in operation example 1, the padding bit need not be inserted.

Fig. 10 is a diagram showing an example of a correspondence relationship between RNTI and DCI format according to operation example 2. As shown in Fig. 10, UE200 may assume that the size of DCI format 1_2 related to G-RNTI is equal to the size of DCI format 2_0 not related to G-RNTI.

Note that only DCI 1_1/1_2 scrambled by G-RNTI may be equal to DCI 2_x. DCI 1_0 scrambled by G-RNTI may be equal to existing DCI 1_0 (C-RNTI, CSS).

That is, DCI 1_0 for MBS may be counted as C-RNTI, and DCI 1_1/1_2 for MBS may be counted as other RNTI such as G-RNTI.

The size of DCI format 2_x (For example, DCI format 2_0: up to 128 bits, DCI format 2_1: up to 126 bits) may be specified by a parameter in the upper layer (RRC) or may be the same size as DCI 1_0.

Since DCI format 2_x(group common PDCCH) is common among multiple UEs (However, it is not always common among UEs related to the same G-RNTI.), DCI format x related to G-RNTI is likely to be common among UEs. Since the DCI format is not necessarily common among UEs related to the same G-RNTI, in addition to this operation example, a padding bit as shown in operation example 1 may be added to at least one of DCI format x related to G-RNTI or DCI format 2_x(group common PDCCH) not related to G-RNTI.

### (3.3) Modifications

As described above, in operation examples 1 and 2 described above, DCI 2_x and DCI size may be aligned only for DCI 1_1/1_2 which has been CRC scrambled by G-RNTI.

DCI 1_0 which has been CRC scrambled by G-RNTI may be aligned with existing DCI 1_0 (C-RNTI, CSS). The size of existing DCI 1_0 (C-RNTI, CSS) may be a common size among multiple UEs (UEs within a cell).

Further, the operation of operation examples 1 and 2 may be switched (used differently) by the DCI format for MBS (multicast). For example, if the DCI format for MBS is DCI 1_0, operation example 2, and if the DCI format for MBS is DCI 1_1/1_2, operation example 1 may be applied.

Alternatively, the operations of operation examples 1 and 2 may be applied simultaneously to the DCI format for MBS, or only one of them may be applied. In addition, when the DCI format is applied simultaneously to a common DCI format, the application of either operation may be specified by the 3GPP specification, or it may be set each time by the network.

### (4)Operational effects

According to the above-described embodiment, the following operation effects can be obtained. Specifically, the UE200 may assume that the size of the individual DCI (first downlink control information) for the UE200 is adjusted to the size of the DCI (second downlink control information) for the MBS, and execute scheduling of the downlink data channel (PDSCH).

Alternatively, the UE200 may assume that the size of the DCI (second downlink control information) for the MBS is adjusted to the size of the DCI (first downlink control information) for the individual UE200, and execute scheduling of the downlink data channel (PDSCH).

The UE200 may assume that the size of the first downlink control information and the size of the second downlink control information are common, and execute scheduling of the downlink data channel.

Therefore, even when the number of candidate DCIs increases in the MBS, the number of blind detections at the time of receiving the DCIs can be suppressed, and performance degradation can be avoided.

### (5)Other Embodiments

Although the embodiments have been described above, they are not limited to the description of the embodiments, and it is obvious to those skilled in the art that various modifications and improvements can be made.

In the above-described embodiment, DCI format 1_0/1_1/1_2 scrambled CRC by G-RNTI has been described as an example, but the DCI format may be called by another name.

For example, DCI format 1_0 scrambled CRC by G-RNTI may be expressed as "One or more DCI formats to be scrambled by G-RNTI, of which the payload size is small" or "Formats scrambled by G-RNTI that do not contain specific fields." DCI format 1_1/1_2 scrambled CRC by G-RNTI may be expressed as "One or more DCI formats to be scrambled by G-RNTI, of which the payload size is large" or "Formats scrambling by G-RNTI that contain specific fields."

In the above embodiment, MBS PDSCH has been described as an example, but at least any of the above operation examples may also be applied to other downstream channels such as MBS PDCCH. Furthermore, the above operation examples may be combined and applied in combination as long as there is no conflict.

In the above description, configure, activate, update, indicate, enable, specify, and select may be interchanged. Similarly, link, associate, correspond, and map may be interchanged, and allocate, assign, monitor, and map may be interchanged.

In addition, specific, dedicated, UE-specific, and UE-specific may be interchanged. Similarly, common, shared, group-common, UE-common, and UE-shared may be interchanged.

Further, the block configuration diagram (Fig. 4) used in the description of the above embodiment shows blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions transmission is called a transmission unit (transmitting unit) or a transmitter. As described above, the method of realization of both is not particularly limited.

In addition, the gNB100 and UE200 described above may function as computers for processing the radio communication method of the present disclosure. Fig. 11 is a diagram showing an example of a hardware configuration of the device. As shown in Fig. 11, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see Fig. 4) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU), including interfaces to peripheral devices, controls, computing devices, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Information notification is not limited to the aspects/embodiments described in this disclosure and may be performed using other methods. For example, information notification may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals, or a combination thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc. of the embodiments/embodiments described in the present disclosure may be rearranged as long as there is no conflict. For example, the method described in the present disclosure presents the elements of the various steps using an exemplary sequence and is not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the embodiments/embodiments described in the present disclosure may be used alone, in combination, or alternatively with execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, planes, etc.), an unmanned mobile (For example, drones, selfdriving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, up channels, down channels, etc. may be replaced with side channels (or side links).

Similarly, mobile stations in the present disclosure may be replaced with base stations. In this case, the base station may have the function of the mobile station. A radio frame may be composed of one or more frames in the time domain. Each frame or frames in the time domain may be referred to as a subframe. A subframe may be further configured by one or more slots in the time domain. Subframes may be of a fixed time length (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in units of time greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframe and the TTI may be a subframe (1 ms) in the existing LTE, a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channelencoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Accordingly, reference to the first and second elements does not imply that only two elements may be employed therein, or that the first element must in any way precede the second element.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgment" and "decision" may include regarding some action as "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Accordingly, the statements in this disclosure are for illustrative purposes and are not of any restrictive significance to this disclosure.

### [Explanation of Reference Numerals]

10 radio communication system
20 NG-RAN
100 gNB
200 UE
210 radio signal transmission and reception unit
220 amplifier unit
230 modulation and demodulation unit
240 control signal and reference signal processing unit
250 encoding/decoding unit
260 data transmission and reception unit
270 control unit
1001 processor
1002 memory
1003 storage
1004 communication device
1005 input device
1006 output device
1007 buses

## Claims

1. A terminal comprising:
a reception unit that receives first downlink control information for individual terminals and second downlink control information for data distribution to a plurality of terminals; and
a control unit that performs downlink data channel scheduling assuming that a size of the first downlink control information is adjusted to a size of the second downlink control information.

2. A terminal comprising:
a reception unit that receives first downlink control information for individual terminals and second downlink control information for data distribution to a plurality of terminals; and
a control unit that performs downlink data channel scheduling assuming that a size of the second downlink control information is adjusted to a size of the first downlink control information.

3. A terminal comprising:
a reception unit that receives first downlink control information for individual terminals and second downlink control information for data distribution to a plurality of terminals; and
a control unit that performs downlink data channel scheduling, assuming that a size of the first downlink control information and a size of the second downlink control information are common.

4. A radio communication method comprising the steps of:
receiving first downlink control information for individual terminals and second downlink control information for data distribution to a plurality of terminals; and
assuming that a size of the second downlink control information is adjusted to a size of the first downlink control information and performing scheduling of a downlink data channel.

5. A radio communication method comprising the steps of:
receiving first downlink control information for individual terminals and second downlink control information for data distribution to a plurality of terminals; and
assuming that a size of the second downlink control information is adjusted to a size of the first downlink control information and performing scheduling of the downlink data channel.

6. A radio communication method comprising the steps of:
receiving first downlink control information for individual terminals and second downlink control information for data distribution to a plurality of terminals; and
assuming that a size of the first downlink control information and a size of the second downlink control information are common and performing scheduling of a downlink data channel.
